# EUROPÄISCHE PATENTSCHRIFT

(11) **EP 2 110 056 B1**
(45) Veröffentlichungstag und Bekanntmachung des Hinweises auf die Patenterteilung: **11.06.2014**
(21) Anmeldenummer: 09005037.8
(22) Anmeldetag: 06.04.2009
(51) Int. Cl.: A47C 27/15, B32B 3/28

(54) **Verbundanordnung**
Compound assembly
Agencement composite

(30) Priorität: 18.04.2008 DE 202008005450 U
(43) Veröffentlichungstag der Anmeldung: 21.10.2009
(73) Patentinhaber: SCHEURING, Bernhard J., 71287 Weissach-Flacht (DE)
(72) Erfinder: SCHEURING, Bernhard J., 71287 Weissach-Flacht (DE)
(74) Vertreter: Maser, Jochen

(56) Entgegenhaltungen:
- DE-A1- 10 228 406

## Beschreibung

Die Erfindung betrifft eine Verbundanordnung, bestehend aus wenigstens einem Verbundbauteil mit einer ersten flächenförmigen Schicht und zumindest einem Strukturelement gemäß dem Oberbegriff des Anspruchs 1.

Aus der DE 102 28 406 A1 ist ein Verbundbauteil mit einer Schicht aus wenigstens einem Strukturelement bekannt. Diese eine Schicht ist als flächenförmige Schicht ausgebildet und besteht beispielsweise aus Textilien, Vliesgeweben, Verbundmaterialien oder dergleichen. Die Strukturelemente sind aus Kunststoff oder einem Kunststoffverbundmaterial als bandförmige Körper hergestellt, welcher in eine spiralförmige Anordnung nach dessen Herstellung übergeführt wird. Zur Ausgestaltung eines Verbundbauteils werden mehrere Strukturelemente auf eine erste Schicht aufgebracht. Anschließend kann eine weitere flächenförmige Schicht aufgebracht werden, welche an den Strukturelementen der ersten Seite gegenüberliegend angeordnet ist. Diese Verbundbauteile weisen eine Vielzahl von Einsatzmöglichkeiten und Vorteile auf.

Der Erfindung liegt die Aufgabe zugrunde, eine Verbundanordnung mit zumindest einem Verbundbauteil zu schaffen, so dass eine flexible Anpassung an unterschiedliche Anwendungen und Einsatzfälle in kostengünstiger Weise ermöglicht ist.

Diese Aufgabe wird erfindungsgemäß durch eine Verbundanordnung, bestehend aus zumindest einem Verbundbauteil, welche als eine flächenförmig durchgehende Schicht ausgebildet ist, und zumindest einem weiteren Verbundbauteil auf zumindest einer Seite des ersten Verbundbauteils gelöst. Das zumindest eine weitere Verbundbauteil ist als weitere Schicht ausgebildet und umfasst eine Auf- oder Anlagefläche, wobei diese weitere Schicht modular aufgebaut ist. Diese Schicht des weiteren Verbundbauteils umfasst zumindest ein Wechselmodulelement, welches austauschbar zum zumindest einen benachbarten Basismodulelement angeordnet ist. Dadurch wird ermöglicht, dass durch die eine durchgehende flächenförmige Schicht als erstes Verbundbauteil einerseits eine durchgehende Anlage- oder Auflagefläche geschaffen ist, welche andererseits zur Aufnahme einer modular aufbaubaren weiteren Schicht als Verbundbauteil vorgesehen ist. Das wiederum ermöglicht, dass beispielsweise Bereiche oder Zonen mit unterschiedlichem Verformungsgrad zumindest bezüglich der weiteren Schicht und bevorzugt bezüglich der Gesamtdicke der Verbundanordnung einstellbar sind. Dadurch wird auch ermöglicht, dass besonders belastete Zonen einfach durch neue Wechselmodulelemente erneuert werden können. Somit kann eine solche Verbundanordnung als Transportverpackung für empfindliche Gegenstände in einfacher Weise an deren Konturen angepasst und eingesetzt werden. Gleichzeitig kann eine solche Verbundanordnung unterschiedliche Stöße spezifisch abfedern und empfindliche Gegenstände schützen. Darüber hinaus kann eine solche Verbundanordnung als Matratze eingesetzt werden. Des Weiteren kann eine solche Verbundanordnung zur Hinterfütterung oder zur Schalldämmung in oder von Zwischenräumen eingesetzt werden, wobei aufgrund dem unterschiedlichem Verformungsgrad eine entsprechende Anpassung an die Geometrie der Zwischenräume und/oder des absorbierenden Schalls erfolgen kann.

Nach einer bevorzugten Ausgestaltung der Erfindung ist vorgesehen, dass das Basismodulelement der zumindest einen weiteren als Verbundbauteil ausgebildeten Schicht fest mit dem ersten Verbundbauteil verbunden ist und zumindest ein weiteres Wechselmodulelement benachbart zum zumindest einen Basismodulelement zur Bildung der weiteren Schicht vorgesehen ist. Dadurch kann individuell ein Verformungsgrad in der weiteren Schicht eingestellt werden, der bedarfsabhängig aufgrund der Wechselmodulelemente in diesen Bereichen oder Zonen anpassbar ist. Somit kann nicht nur eine schnelle und einfache Anpassung des individuellen Verformungsgrades innerhalb einzelner Zonen oder Bereichen durch Austausch der Wechselmodulelemente ermöglicht sein, sondern auch bei einer Alterung dieser Wechselmodulelemente eine einfache Erneuerung ermöglicht werden.

Nach einer bevorzugten Ausgestaltung der Erfindung ist vorgesehen, dass die Wechselmodulelemente einen Schichtaufbau aufweisen, der prinzipiell dem Schichtaufbau des ersten Verbundbauteiles entspricht. Dadurch kann eine Vereinfachung in der Herstellung gegeben sein. Alternativ kann das Wechselmodulelement auch einen Schichtaufbau aus einer oder mehreren Lagen von Schaumstoffschichten umfassen, welche gleiche oder unterschiedliche Raumgewichte beziehungsweise Schäumgrade und/oder Verformungseigenschaften aufweisen. Somit kann das Wechselmodul eine Vielzahl von Anforderungen an den Verformungsgrad aufweisen und weitere Funktionen, wie beispielsweise Belüftung, erfüllen und individuell ausgewählt werden.

Die erfindungsgemäße Verbundanordnung weist bevorzugt ein Verbundbauteil auf, welches aus Wechsel- und Basismodulelementen ausgebildet ist, wobei das zumindest eine Wechselmodulelement hinsichtlich des Verformungsgrades gleich wie das zumindest eine Basismodulelement ausgebildet ist oder das zumindest eine Wechselmodulelement zumindest bezüglich einer Krafteinwirkung auf deren Auf- oder Anlagefläche abweichend im Verformungsgrad von dem zumindest einen benachbarten Basismodulelement oder dem ersten Verbundbauteil ausgebildet ist. Somit können bei Bedarf die Wechselmodulelemente im Verformungsgrad gleich ausgebildet sein wie die Basismodulelemente. Sofern in einzelnen Zonen oder Bereichen der Verbundanordnung eine erhöhte Belastungsaufnahme erfolgen soll, kann ein im Verformungsgrad daran angepasstes Wechselmodulelement eingesetzt werden. Analoges gilt auch für den Fall, dass die Wechselmodulelemente eine verringerte Belastung als die Basismodulelemente aufnehmen sollen. Sofern eine Alterung sich einstellt, kann ein neues Wechselmodulelement eingesetzt werden.

Nach einer weiteren bevorzugten Ausgestaltung der Erfindung ist vorgesehen, dass die Wechselmodulelemente sich zumindest abschnittsweise oder vollständig über die Breite der An- oder Auflagefläche des ersten Verbundbauteils oder auch nur teilweise erstrecken. Eine solche Ausführungsform ist insbesondere bei der Ausbildung von Matratzen von Vorteil, so dass die Zonen und Bereiche mit unterschiedlichen Verformungsgraden sich über die gesamte Breite der Matratze erstrecken. Alternativ kann vorgesehen sein, dass diese Wechselmodulelemente in einzelnen Sektionen über eine vorbestimmte Länge oder Breite oder weiteren bedarfsmäßig vorgesehenen Geometrien in der Grundfläche auswechselbar ausgebildet sind, wobei das oder die Wechselmodulelemente einen zwischen den Basismodulelementen oder an einem Randbereich des Verbundbauteils und zumindest einem Basismodulelement gebildeten Zwischenraum oder Aufnahmeraum zumindest teilweise und/oder abschnittsweise oder vollständig ausfüllen. Analoges gilt für die Basismodulelemente. Dieser modulare Aufbau ermöglicht auch die Vorbeugung und Therapie von Dekubitus.

Das zumindest eine Verbundbauteil der Verbundanordnung weist bevorzugt einen Aufbau auf, bei dem zumindest ein Einlegeelement vorgesehen ist, insbesondere in einem zwischen zwei Strukturelementen gebildeten Zwischenraum. Dadurch können weitere Anforderungen an die Verformung spezifisch eingestellt werden. Solche Einlegeelemente können in jedem Zwischenraum zwischen zwei benachbarten Strukturelementen oder auch nur in einzelnen Zwischenräumen vorgesehen sein. Die äußere Kontur der Einlegeelemente kann an die angrenzende Kontur der Strukturelemente angepasst sein. Darüber hinaus können diese auch nur einen Anlagepunkt zu dem zumindest einen benachbarten Strukturelement oder sogar mit Abstand zu dem zumindest einen benachbarten Strukturelement angeordnet sein. Solche Einlegeelemente können den Zwischenraum vollständig zwischen zwei Strukturelementen ausfüllen. Ebenso können diese auch nur an einer oberen und unteren Schicht anliegen, welche die Strukturelemente umgeben und/oder zu der die Strukturelemente mit Abstand angeordnet sind. Diese Einlegeelemente können auch nur zwischen zwei flächenförmigen Schichten beziehungsweise einer oberen und unteren Schicht zur Bildung eines Verbundbauteils vorgesehen sein.

Nach einer weiteren bevorzugten Ausgestaltung der Erfindung ist vorgesehen, dass der unterschiedliche Verformungsgrad der Verbundbauteile durch die geometrische Ausgestaltung der Strukturelemente, der Einlegeelemente und/oder der Auflagefläche einstellbar ist. Dadurch kann der prinzipielle Aufbau und die Anordnung der Verbundbauteile aufrechterhalten werden, wobei insbesondere durch eine Anpassung der Strukturelemente in deren geometrischen Anordnung und/oder deren Größe und/oder der Steifigkeiten des Bandmaterials die unterschiedlichen Verformungsgradeeingestellt werden können.

Eine bevorzugte Ausgestaltung der Verbundanordnung sieht vor, dass die Schicht des ersten Verbundbauteils und zumindest eine weitere Schicht des Verbundbauteils mit Basis- und Wechselmodulelementen als Matratze ausgebildet sind, wobei die Wechselmodulelemente zumindest im Schulterbereich und Beckenbereich der Auflagefläche vorgesehen sind. Dadurch kann eine einfache und individuelle Anpassung an die Körpergröße und das Körpergewicht des jeweiligen Benutzers ermöglicht sein. Das zwischen dem Schulter- und Beckenbereich angeordnete Basismodulelement ist bevorzugt mit höherer Verformungssteifigkeit ausgebildet, so dass dadurch eine Lordosenstütze gegeben ist. Somit kann eine gute Anpassung an den Doppel-S-förmigen Verlauf des Rückgrates gegeben sein.

Nach einer alternativen Ausgestaltung der Erfindung ist vorgesehen, dass die Schicht des ersten Verbundbauteils als Unterfederung und die zumindest eine Schicht des weiteren Verbundbauteils mit Basis- und Wechselmodulelement als Matratze ausgebildet ist. Solche Verbundanordnungen bilden eine Kombination, bei der sowohl die Matratzenfunktion als auch die Unterfederung in einem vorgesehen sind. Dies ermöglicht, dass eine solche Verbundanordnung auf ein sehr einfach ausgebildetes Bettgestell aufgelegt werden kann. Insbesondere bei stapelbaren oder klappbaren Bettrosten ist eine solche Unterfederung von Vorteil, da ein einfacher Auf- und Abbau durch die Integration der Unterfederung in der Matratze ermöglicht ist.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
- Figur 1: eine schematische Seitenansicht der Verbundanordnung,
- Figur 2: eine schematische Draufsicht auf die Verbundanordnung gemäß Figur 1,
- Figur 3: eine schematische Seitenansicht der Verbundanordnung gemäß Figur 1 mit separat dargestellten Wechselmodulelementen und
- Figur 4: eine schematische Seitenansicht einer zusammengeklappten Verbundanordnung.

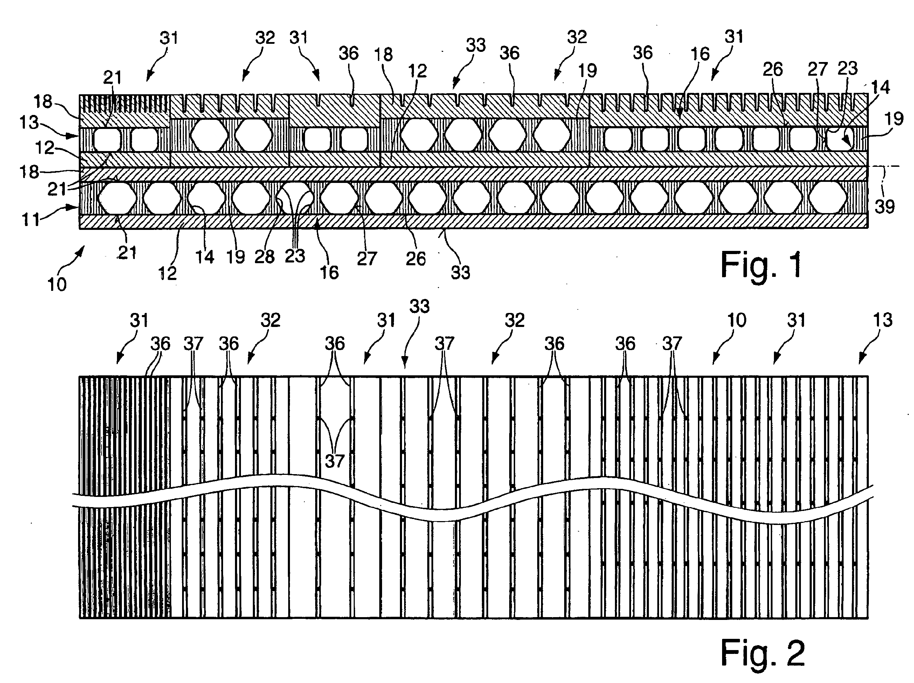

In Figur 1 ist eine schematische Seitenansicht der erfindungsgemäßen Verbundanordnung 10 dargestellt. Diese Verbundanordnung 10 umfasst ein erstes Verbundbauteil 11, welches als durchgehende flächenförmige Schicht ausgebildet ist, und ein zweites Verbundbauteil 13 aufnimmt, welches modular aufbaubar ist. Alternativ kann vorgesehen sein, dass weitere erste und zweite Schichten der Verbundbauteile 11, 13 zu einer gemeinsamen Verbundanordnung 10 kombiniert werden.

Das Verbundbauteil 11 umfasst eine erste Schicht 12, welche beispielsweise als Deckschicht bezeichnet wird. Auf dieser ersten Schicht 12 sind bevorzugt mehrere Strukturelemente 14 nebeneinander und mit Abstand, vorzugsweise in einem gleichen Rastermaß, zueinander zur Bildung eines Zwischenraumes 16 angeordnet. Der ersten Schicht 12 gegenüberliegend befindet sich eine weitere Schicht 18, die ebenfalls auf den Strukturelementen 14 aufliegt. Die Schichten 12 und 18 können einen gleichen Aufbau aufweisen und/oder aus einem gleichem Material bestehen. Diese können anwendungsspezifisch auch voneinander abweichen. Beispielsweise können die Schichten 12, 18 als Verbundschicht aufgebaut sein. Solche Verbundschichten können zwei oder mehrere Schichten aus unterschiedlichen Materialien umfassen. Beispielsweise kann eine Vliesschicht mit einer Schaumstoffschicht vorgesehen sein. Des Weiteren kann eine Moltonauflage, beispielsweise beim Einsatz von Matratzen, vorgesehen sein. Darüber hinaus kann auf einer Vlies- und/oder Schaumschicht eine gummierte Oberfläche ausgebildet werden. Die Schichten 12, 18 können darüber hinaus eine Perforation aufweisen. Die Oberflächen der Schichten 12, 18 können des Weiteren sowohl durchgehend eben als auch gewellt, gerillt, geriffelt oder anderweitig strukturiert ausgebildet sein.

In den zwischen den Strukturelementen 14 und der zumindest einen Schicht 12 gebildeten Zwischenräumen 16 sind Einlegeelemente 19 vorgesehen. Der in Figur 1 beschriebene Aufbau des Verbundbauteils 11 kann alternativ auch darin bestehen, dass nur eine Schicht 12 oder 18 vorgesehen ist. Die erste und weitere Schicht 12, 18, und die Strukturelemente 14 und/oder die Einlegeelemente 19 sind miteinander verbunden. Des Weiteren kann vorgesehen sein, dass einzelne Komponenten des Verbundbauteils 11 lose und wiederum einzelne Komponenten des Verbundbauteils 11 miteinander verbunden sind. Ebenso können auch alle Komponenten des Verbundbauteiles 11 miteinander verbunden sein. Die Verbindung der Komponenten des Verbundbauteils 11 kann durch Verschweißen, Verkleben, Verpressen oder durch weitere form-, kraft- oder stoffschlüssige Verbindungen erzielt werden. In Abhängigkeit der jeweiligen Anwendungsbeispiele und Einbausituationen wird ausgewählt, ob und welche Komponenten des Verbundbauteiles 11 fest miteinander verbunden werden oder nur lose zueinander angeordnet sind.

Die Strukturelemente 14 sind aus der DE 102 28 406 A1 bekannt und können einen darin beschriebenen Aufbau aufweisen. Diesbezüglich wird auf diese DE 102 28 406 A1 vollumfänglich Bezug genommen. Analoges gilt für die erste Schicht 12 und die weitere Schicht 18.

Die Einlegeelemente 19 können aus einem Thermoplast, Duroplast oder Elastomer bestehen. Ebenso können Schäume oder Schaumstoffe, Textilien, Vliese, Filze, Gewebe, Gitterstrukturen, Verbundmaterialien, welche unter anderem auch metallische Werkstoffe, nichtmetallische Werkstoffe, mineralische Werkstoffe, zum Beispiel Mineralwolle oder Glaswolle, Holz oder dergleichen umfassen können, vorgesehen sein.

Die Strukturelemente 14 sind im Verbundbauteil 11 im Querschnitt gesehen sechseckig und im Verbundbauteil 13 teils sechseckig und teils oval ausgebildet. Diese weisen eine obere und untere Stützfläche 21 auf, auf denen die erste Schicht 12 und weitere Schicht 18 befestigt sind. Dies kann beispielsweise durch Verkleben, Verschweißen oder andere Verbindungstechniken vorgesehen sein. Die Zwischenräume 16 werden einerseits durch die erste und zweite Schicht 12, 18 sowie durch die aufeinander zuweisenden Flächenabschnitte 23 der Strukturelemente 14 gebildet, welche sich an die Auflageflächen 33 anschließen. Das Einlegeelement 19 ist beispielsweise an diese Querschnittsgeometrie des Zwischenraumes 16 angepasst und kann von der Stirnseite her eingeschoben werden. Alternativ kann vorgesehen sein, dass auf eine erste Schicht 12 ein erstes Strukturelement 14 aufgebracht wird, nachfolgend ein daran anliegendes Einlegeelement 19 und wiederum nachfolgend ein Strukturelement 14 usw. aufgebracht und zum Schluss die weitere Schicht 18 aufkaschiert wird. Alternativ kann vorgesehen sein, dass zunächst die Strukturelemente in einem vorgesehenen Abstand, insbesondere in einem gleichmäßigen oder ungleichmäßigen Rastermaß aufgebracht werden und anschließend die Einlegeelemente 19 in die jeweiligen Zwischenräume 16 eingesetzt werden.

Das Einlegeelement 19 kann in seiner Dimensionierung in Abhängigkeit des Einsatzzweckes unterschiedlich ausgebildet sein. Beispielsweise kann, wie dies in Figur 1 dargestellt ist, das Einlegeelement 19 eine obere und untere Anlagefläche 26 aufweisen, die mit der Schicht 12, 18 jeweils verbunden ist. Die Seitenflächen 27 des Einlegeelementes 19, welche den Flächenabschnitten 23 des Strukturelementes 14 gegenüberliegend vorgesehen sind, weisen beispielsweise einen kleinen Abstand zu den Flächenabschnitten 23 auf. Somit wirkt dieses Einlegeelement 19 als zusätzliches Stützelement parallel zu den Strukturelementen 14 zwischen den Schichten 12 und 18. Bei einer Belastung der Schicht 12 oder 18 liegen die Flächenabschnitte 23 erst ab einer bestimmten Beaufschlagung an den Seitenflächen 27 der Einlegeelemente 19 an und bewirken einen Versteifungseffekt. Diese Einlegeelemente 19 können alternativ auch als Knickschutz für die Strukturelemente 14 dienen.

Eine alternative Ausführungsform des Verbundbauteils 11, 13 sieht vor, dass die Seitenflächen 27 des Einlegeelementes 19 an den Flächenabschnitten 23 der einander gegenüberliegenden Strukturelementen 14 angreifen, wohingegen die Anlageflächen 26 des Einlegeelementes 19 zur ersten und weiteren Schicht 12, 18 beabstandet sind. Die Einlegeelemente 19 können neben einem Formschluss auch kraft- und/oder stoffschlüssig mit den Strukturelementen 14 verbunden sein.

Das Einlegeelement 19 ist gemäß einer weiteren alternativen Ausführungsform eines Verbundbauteils 11 beispielsweise würfel- oder quaderförmig ausgebildet und in dem Zwischenraum 16 derart angeordnet, dass dieses Einlegeelement 19 die erste und weitere Schicht 12, 18 zueinander beabstandet. Bei dieser Ausführungsform sind die Seitenflächen 27 zu dem jeweiligen angrenzenden Flächenabschnitt 23 mit Abstand angeordnet. Alternativ können auch eine oder beide Seitenflächen 27 an den Flächenabschnitten 23 anliegen oder diese sogar unter Vorspannung aufnehmen.

Eine weitere alternative Ausführungsform des Einlegeelementes 19 sieht vor, dass es beispielsweise würfel- oder quaderförmig ausgebildet ist. Bei dieser Ausführungsform ist nur eine der beiden Anlageflächen 26 mit der ersten oder weiteren Schicht 12, 18 verbunden. Dieses Einlegeelement 19 kann mit seinen Seitenflächen 27 wiederum mit Abstand zu den Flächenabschnitten 23 des Strukturelementes 14 vorgesehen sein. Ebenso kann nur eine oder beide Seitenflächen 27 an den Flächenabschnitten 23 anliegen oder die Seitenflächen 27 können sogar eine Vorspannung auf die Flächenabschnitte 23 der Strukturelemente 14 ausüben.

Solche quader- oder würfelförmige Einlegeelemente 19 können auch bei Strukturelementen 14 mit einer Querschnittsgeometrie vorgesehen sein, welche von einem ovalen Querschnitt abweichen. Beispielsweise kann das Strukturelement 14 eine sechs-, acht- oder zwölfeckige Struktur aufweisen, wobei die Einlegeelemente 19 bezüglich deren Ausgestaltungsmöglichkeiten in Analogie zu den vorgeschriebenen Ausführungsformen vorgesehen sein können.

Bei dem im Querschnitt sechseckigen Strukturelement 14 kann vorgesehen sein, dass lediglich ein Eckbereich des Flächenabschnitts 23 an der Seitenfläche 27 des Einlegeelementes 19 anliegt. Ebenso können die jeweils sich in den Eckbereichen 28 anschließenden Flächenabschnitte an korrespondierenden Flächenabschnitten der Seitenfläche des Einlegeelementes 19 anliegen. In Abhängigkeit des gewünschten Effektes, der durch die Anordnung der Einlegeelemente 19 ausgebildet werden soll, erfolgt die Materialauswahl, Dimensionierung der Einlegeelemente bezüglich deren Höhe und deren Breite zur Positionierung in den Zwischenraum 16.

Des Weiteren kann bei der sechseckigen Ausführungsform der Strukturelemente alternativ vorgesehen sein, dass die Einlegeelemente beispielsweise zweiteilig ausgebildet sind, wobei das erste und zweite Teil in einer zusammengesetzten Position Einlegeelementen 19 entsprechen können, die vorstehend bereits beschrieben sind. Diese zweiteilig ausgebildeten Einlegeelemente ermöglichen eine noch verbesserte Flexibilität beim Zusammenbau eines solchen Verbundbauteils 11. Dadurch können sich solche Einlegeelemente 19 auch in Hinterschneidungsbereichen erstrecken. Alternativ kann ebenso vorgesehen sein, dass ein Teil des Einlegeelementes 19 an einem Flächenabschnitt 23 des Strukturelementes 14 befestigt und der weitere Teil des Einlegeelementes 19 an dem gegenüberliegenden Strukturelement 14 oder an einer oder beiden Schichten 12 oder 18 angeordnet ist.

Ein weiteres Ausführungsbeispiel des Verbundbauteils 11, 13 sieht vor, dass das Einlegeelement 19 einen größeren Abstand zwischen zwei Strukturelementen 14 überbrückt, wobei das Einlegeelement 19 selbst einen Aufnahmebereich aufweist, welcher beispielsweise zur Aufnahme eines weiteren Strukturelementes 14 vorgesehen ist, und welches im Querschnitt kleiner als die benachbarten Strukturelemente 14 ausgebildet ist. Dadurch können verschiedene Festigkeits- und Steifigkeitsverläufe in der flächigen Erstreckung des Verbundbauteils 11 ermöglicht werden. Darüber hinaus kann durch ein solches zusätzliches Strukturelement 14 in einem Auflageelement 19 eine zusätzliche Klimatisierung oder auch ein Zuführraum für Leitungen oder dergleichen geschaffen werden. Das Strukturelement 14 kann in Analogie zu den vorbeschriebenen Ausführungsformen in dem Aufnahmebereich vorgesehen und auch ausgebildet sein. Dies bedeutet, dass das Strukturelement 14 lose in dem Aufnahmebereich oder unter Vorspannung gehalten werden kann. Des Weiteren können einzelne Flächenabschnitte der Strukturelemente 14 anliegen und andere wiederum nicht.

Eine weitere alternative Ausführungsform des Verbundbauteiles 11, 12 ist beispielsweise durch die sechseckförmig ausgebildeten Strukturelemente 14 gegeben, die in der Höhe gleichgroß ausgebildet sind wie die Einlegeelemente 19. Die dazwischenliegenden ovalen Strukturelemente 14 weisen jedoch eine geringere Höhe auf. Diese ovalen Strukturelemente 14 können auch aus einem anderen Material mit einer höheren Steifigkeit als die sechseckförmigen Strukturelemente 14 und/oder die Einlegeelemente 19 ausgebildet sein. Dadurch kann der Federweg maßgeblich durch die sechseckförmigen Strukturelemente 14 sowie den Einlegeelementen 19 bestimmt werden, und die ovalen Strukturelemente 14 bilden einen Anschlag. Es versteht sich, dass die Funktion der ovalen Strukturelemente 14 auch von den Einlegeelementen 19 oder den sechseckförmigen Strukturelementen 14 übernommen werden kann und die anderen Elemente entsprechend ausgebildet werden.

Nach einer weiteren bevorzugten Ausgestaltung des Verbundbauteils 11, 13 ist vorgesehen, dass die Einlegeelemente 19 die erste und weitere Schicht 12, 18 tragen, hingegen die Strukturelemente 14 in der Höhe geringer ausgebildet und in den zwischen den Einlegeelementen 19 gebildeten Zwischenräumen 16 angeordnet sind. In einem Ausführungsbeispiel können die obere und untere Schicht 12, 18 mit den Einlegeelementen 19 fest verbunden sein. Alternativ kann auch nur eine Schicht oder gar keine Schicht mit den Einlegeelementen 19 dauerhaft verbunden sein.

Die Einlegeelemente 19 sind in den vorstehenden Ausführungsformen als vollvolumige Körper dargestellt. Abweichend hiervon können die Einlegeelemente 19 auch als Hohlkörper oder als Körper mit einer randoffenen Ausnehmung ausgebildet sein. Des Weiteren können die Einlegeelemente 19 profilierte Tragstrukturen umfassen, um die vorbeschriebenen Funktionen und Anordnungen zu erfüllen. Darüber hinaus brauchen die Einlegeelemente 19, welche in einem Verbundbauteil 11 vorgesehen sind, nicht alle aus demselben Material bestehen, sondern es können unterschiedliche Materialien, unterschiedliche Geometrien als auch unterschiedliche Steifigkeiten für die Einlegeelemente 19 vorgesehen sein, die in einem gemeinsamen Verbundbauteil 11 eingesetzt werden.

Das weitere Verbundbauteil 13 umfasst bei der in Figur 1 dargestellten Ausführungsform beispielsweise drei Basismodulelemente 31 und zwei Wechselmodulelemente 32. Diese Basis- und Wechselmodulelemente 31, 32 erstrecken sich, wie aus Figur 2 hervorgeht, vollständig über die Breite einer Auflagefläche 33 der Verbundanordnung 10. Die Länge der Basismodulelemente 31 beziehungsweise der Wechselmodulelemente 32 kann an den jeweiligen Anwendungsfall angepasst werden. Alternativ kann vorgesehen sein, dass die Wechselmodulelemente 32 sich auch nur abschnittsweise über die Breite der Anlagefläche 33 erstrecken. Darüber hinaus können auch einzelne Sektionen oder Bereiche mit verschiedenen Geometrien vorgesehen sein, in welchen die Wechselmodulelemente 32 einsetzbar sind. Diese können ebenso einzelne Sektionen oder Zonen umfassen, die an den Randbereichen der Auflagefläche 33 der Verbundanordnung 10 angrenzen. Analoges gilt für die Ausbildung der Basismodulelemente 31. Die Wechselmodulelemente 32 sind im strukturellen Aufbau bevorzugt gleich ausgebildet wie die Basismodulelemente 31, wobei der Verformungsgrad abweichend ausgelegt sein kann. Diese Änderung im Verformungsgrad wird durch die Geometrie des Strukturelementes 14 und/oder des Einlegeelementes 19 und/oder der Dicke und/oder der Materialbeschaffenheit und/oder des Schichtaufbaus der Wechsel- und Basismodulelemente 31, 32 bestimmt.

Im Ausführungsbeispiel gemäß Figur 1 ist beispielsweise die Anwendung einer Matratze dargestellt. Das erste Basismodulelement 31, welches an dem linken Randbereich der Anlagefläche 33 der Verbundanordnung 11 angrenzt, bildet beispielsweise den Kopfbereich und weist eine geringere Verformbarkeit bezüglich der Strukturelemente 14 auf. Dabei ist eine weiche und nachgiebige Auflagefläche 33 vorgesehen. Diese Auflagefläche 33 weist bevorzugt eine Vielzahl von tiefen Längsrillen 36 auf, um eine bequeme Auflage und eine gute Durchlüftung für den Kopf zu geben. Weitere Profilierungen oder Konturen sind möglich. Benachbart dazu ist ein Wechselmodulelement 32 vorgesehen, dessen Verformungsgrad gegenüber dem Basismodulelement 31 größer ausgebildet sein kann. In diesem Bereich liegen die Schultern auf. Anschließend ist wiederum ein Basismodulelement 31 mit einem geringen Verformungsgrad vorgesehen, so dass eine Lordosenstütze ausgebildet ist. An diese schließt sich erneut ein Wechselmodulelement 32 an, welches eine Auflagefläche 33 für das Becken bildet und wiederum einen größeren Verformungsgrad umfassen kann. Das dritte Basismodulelement 31 dient zur Auflage der Beine und kann dagegen einen geringeren Verformungsgrad aufweisen.

Die Längsrillen 36 sind bevorzugt bei allen Modulelementen 31, 32 vorgesehen, wobei anwendungsspezifisch die Anzahl und deren Tiefe voneinander abweichen.

Des Weiteren ist bevorzugt vorgesehen, dass die Auflagefläche 33 Durchgangsbohrungen 37 umfasst, die sich von einer Oberfläche der Auflagefläche 33 in den Bereich der Strukturelemente 14 erstrecken. Dadurch kann eine gute Belüftung geschaffen werden. Diese Durchgangsbohrungen 37 wirken wie eine Art Perforation der Auflagefläche 33 und ermöglichen, dass aufgrund der groß ausgebildeten Hohlräume durch die Strukturelemente 14 eine gute Belüftung vorgesehen ist.

Die in den Figuren 1 und 2 beschriebene Verbundanordnung 10 kann beispielsweise auch als Wendematratze eingesetzt werden. Beispielsweise kann die Schicht 12 des Verbundbauteils 11 als Auf- oder Anlagefläche 33 für eine Person dienen, sofern ein durchgehend gleichmäßigerer Verformungsgrad über die gesamte Anlage- oder Auflagefläche 33 gewünscht ist. Die Schicht 12 kann dabei bevorzugt auch Rillen 36 und/oder weitere Strukturierungen aufweisen. Des Weiteren kann diese Schicht 12 Durchgangsbohrungen 37 umfassen. Analoges gilt auch für die Schicht 18.

Nach einer weiteren nicht näher dargestellten Ausführungsform kann auf beiden Seiten des Verbundbauteils 11 ein Verbundbauteil 13 vorgesehen sein. Somit kann eine Wendematratze mit einem durchgehenden Kern ausgebildet werden. Diese Wendematratze weist gleiche Eigenschaften bezüglich des Verformungsgrades sowohl auf der Oberseite als auch auf der Unterseite auf. Darüber hinaus besteht dadurch die Möglichkeit, dass eine Sommer- und Winterseite ausgebildet werden kann. Alternativ können die einzelnen Wechselmodulelemente 32 und/oder Basismodulelemente 31 des oberen und unteren Verbundbauteils 13 auch abweichend voneinander ausgebildet sein, um eine individuelle Einstellung und Anpassung auf jeder Seite zu ermöglichen.

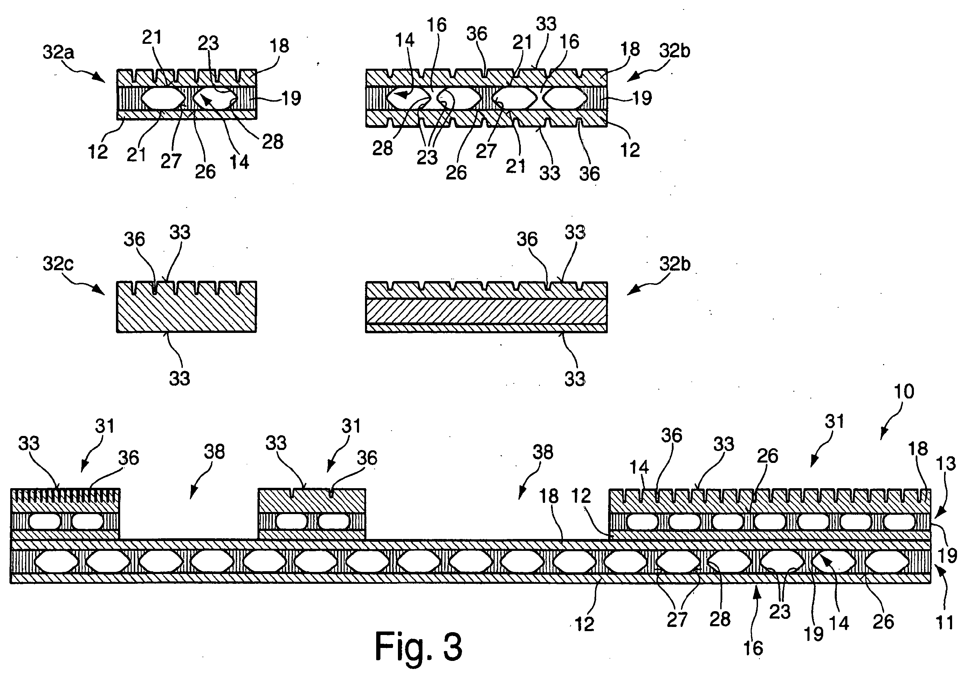

In Figur 3 sind die Wechselmodulelemente 32 gegenüber der Verbundanordnung 10, insbesondere gegenüber dem zweiten Verbundbauteil 13, abgehoben dargestellt. Dabei sind beispielsweise zwei verschiedene Ausführungsformen der Wechselmodulelemente 32 dargestellt, die wahlweise in eine Wechselzone 38 einsetzbar sind, welche durch die Basismodulelemente 31 begrenzt sind. Die erste Ausführungsform des Wechselmodulelementes 32a entspricht auch dem in Figur 1 dargestellten Wechselmodulelement 32. Dieses Wechselmodulelement 32a weist einen charakteristischen Aufbau auf, der eine Schicht 12 umfasst, auf der Strukturelemente 14 aufgebracht sind. Auf den Strukturelementen 14 liegt wiederum eine Schicht 18 auf. Die Schicht 18 kann beispielsweise mit Rillen 36 versehen sein. Zwischen der Schicht 12 und 18 sind beispielsweise Einlegeelemente 19 dargestellt. Diese können in der Form an den Zwischenraum 16 zwischen den Strukturelementen 14 angepasst sein oder auch nur einen Teil des Zwischenraumes 16 umfassen. Die vorstehend auch zu den Figuren 1 und 2 beschriebenen Ausführungsformen sind anwendungsspezifisch möglich.

Das Wechselmodulelement 32b ist gegenüber dem Wechselmodulelement 32a dahingehend modifiziert, dass auch auf der Unterseite der Schicht 12 Rillen 36 eingebracht sind. Des Weiteren ist bei diesem Wechselmodulelement vorgesehen, dass nur in einzelnen Zwischenräumen 16 Einlegeelemente 19 vorgesehen sind, um unterschiedliche Verformungsgrade zu erzielen. Ein solches Wechselmodulelement 32b ermöglicht wie auch das Wechselmodulelement 32a den Einsatz als Wendeelement und kann somit um 180° gedreht eingelegt werden, wobei im Beispielfall gemäß Wechselmodulelement 32a eine andere Steifigkeit bezüglich der Anlagefläche erzielt wird, wohingegen bei dem Wechselmodulelement 32b aufgrund des symmetrischen Aufbaus nach einem Drehen des Wechselmodulelementes 32b um 180° die gleichen Eigenschaften aufrechterhalten bleiben. Die Schichten 12, 18 können ebenfalls auch perforiert sein und/oder verschiedene Beschichtungen aufweisen.

Das Wechselmodulelement 32c besteht beispielsweise aus nur einer Schaumstoffschicht. Dieses kann auf der Ober- oder Unterseite oder beiden Seitenflächen Rillen 36 aufweisen. Zusätzlich kann dieses Element 32c auch noch eine Perforation und/oder verschiedene Beschichtungen umfassen.

In Figur 3 ist des Weiteren eine alternative Ausführungsform zum Wechselmodulelement 32c dargestellt. Das Wechselmodulelement 32d ist beispielsweise mehrlagig aufgebaut. Dabei können Schaumstoffschichten mit unterschiedlichem Raumgewicht, aus unterschiedlichem Material, zum Beispiel aus viskoseelastischem Schaum und Kaltschaum, und/oder mit unterschiedlichen Versteifungen oder Strukturen vorgesehen sein. Ein solches Wechselmodulelement 32d kann ebenfalls auf einer oder auf beiden Seiten Rillen 36 oder eine Struktur aufweisen. Darüber hinaus können Durchgangsbohrungen 37 eingebracht sein und/oder Beschichtungen aufgebracht werden.

Die vorgenannten Wechselmodule 32 können in der Höhe an die Basismodulelemente 31 angepasst sein. Alternativ können diese in der Höhe sowohl höher als auch niedriger im Vergleich zu den benachbarten Basismodulelementen ausgebildet sein.

Die vorgenannten alternativen Aufbaumöglichkeiten und Variationen der Wechselmodulelemente 32 können auch für die Basismodulelemente 31 sowie für das Verbundbauteil 11 vorgesehen sein. In dem Verbundbauteil 11 können auch einzelne Abschnitte der vorgesehenen Ausführungsformen der Wechselmodulelemente 32 angeordnet sein, wobei diese in einer Schicht als Verbundbauteil 11 zusammengefasst sein können.

Die Schicht 18 des Verbundbauteils 11 und die Schicht 12 des Basismodulelementes 31 des Verbundbauteils 13 sind in den Ausführungsformen beispielsweise mit einer durchgehend ebenen Oberfläche ausgebildet, um eine gute Verbindung, insbesondere Verklebung, zu erzielen. Alternativ kann vorgesehen sein, dass die beiden aneinander grenzenden Schichten 12, 18 ebenfalls Strukturierungen, wie beispielsweise Rillen, Riffelungen oder eine gewellte Oberfläche, aufweisen und/oder mit Durchgangsbohrungen versehen sind. Die Konturen der aneinander grenzenden Schichten 12, 18 können dabei auch voneinander abweichen. Dadurch kann des Weiteren die Einstellung von anwendungsspezifischen Verformungen ermöglicht werden.

Darüber hinaus kann die Schicht 18 des Verbundbauteils 13 im Bereich der Wechselzonen 38 eine andersartige Oberflächenstruktur aufweisen als in dem Bereich, in welchem das Basismodulelement 31 des Verbundbauteils 13 an dem Verbundbauteil 11 angreift.

Die Wechselmodulelemente 32 werden gemäß einer ersten Ausführungsform lediglich in die Wechselzonen 38 eingelegt. Aufgrund der in einer Trennebene 39 zwischen dem ersten Verbundbauteil 11 und dem zweiten Verbundbauteil 13 aneinandergrenzenden Auflageflächen 33, die bevorzugt als Schaumschichten ausgebildet sind, wird eine Art Verkrallungs- oder Verhakungseffekt bei Anlage der beiden Auflageflächen 33 erzeugt, um das Wechselmodulelement 32 zwischen den Basismodulelementen 31 zu fixieren. Ergänzend können Klettbänder vorgesehen sein. Des Weiteren kann alternativ vorgesehen sein, dass die Wechselmodulelemente 32 in den seitlichen Randbereichen, die zum Basismodulelement 31 weisen, eine Profilierung aufweisen, die in eine komplementäre Profilierung der Basismodulelemente 31 eingreifen, so dass ein Formschluss gegeben ist.

Nach einer weiteren bevorzugten Ausgestaltung der Erfindung kann vorgesehen sein, dass die Trennebene 39 zwischen dem ersten Verbundbauteil 11 und dem weiteren Verbundbauteil 13 an besondere Eigenschaften angepasst ist. Beispielsweise beim Einsatz einer Matratze kann vorgesehen sein, dass die Schicht 18 des Verbundbauteils 11, welche zur Trennebene weist, an deren Außenseite eine gummierte Oberfläche oder eine Art Moltonauflage aufweist. Dadurch kann eine Trennschicht geschaffen werden, die vermeidet, dass Feuchtigkeit, die durch das weitere Verbundbauteil 13 hindurchdringt, in das erste Verbundbauteil 11 eindringt.

Die Verbundanordnung 10 kann beim Einsatz als Matratze eine Schutzumhüllung aufweisen, welche sowohl die Verbundbauteile 11 und 13 umgibt. Zum Austausch der Wechselmodulelemente 32 können spezifische Öffnungen vorgesehen sein, welche beispielsweise durch einen öffenbaren Überlappungsbereich ausgebildet sind. Des Weiteren kann vorgesehen sein, dass einzelne Abschnitte dieser Schutzumhüllung zurückgestülpt werden können, um einen Austausch der Wechselmodulelemente 32 zu ermöglichen. Des Weiteren ist alternativ vorgesehen, dass jeweils eine Schutzumhüllung um die Wechselmodulelemente 32 vorgesehen ist und zumindest eine Schutzumhüllung das Verbundbauteil 11 und die Basismodulelemente 31 des weiteren Verbundbauteils 13 umgibt.

Eine solche Schutzumhüllung dient beispielsweise als Milbenschutz und ermöglicht, dass ein Matratzenüberzug besser auf der Verbundanordnung 10 gleitet.

Diese Verbundanordnung 10 kann zur Bildung einer Matratze mit einem nicht näher dargestellten Matratzenüberzug umgeben werden, welcher beispielsweise eine einfach wieder verschließbare Öffnung, insbesondere einen Reißverschluss, umfasst, um die Verbundanordnung 10 in den Matratzenüberzug einzubringen, die Wechselmodulelemente 32 in der Lage zu positionieren und zu verschließen.

Nach einer weiteren alternativen Ausgestaltung der Verbundanordnung 10 ist vorgesehen, dass diese Verbundanordnung 10 als eine Kombination aus einer Matratze und einer Unterfederung ausgebildet sein kann. Eine solche Unterfederung kann eine durchgehend gleiche Steifigkeit oder in der Steifigkeit auch unterschiedliche Zonen aufweisen, die den Belastungen entsprechend angepasst sind. Ergänzend können entsprechend die Einlegeelemente 19 und Schichten 12, 18 ausgebildet sein, um eine solche Unterfederung auszubilden. Das Verbundbauteil 13 bildet dann die Matratze, wobei durch den modularen Aufbau der Basis- und Wechselmodulelemente 31, 32 wiederum eine Anpassung an den jeweiligen Benutzer ermöglicht ist.

Die erfindungsgemäße Verbundanordnung 10 kann für verschiedene Einsätze spezifisch ausgebildet werden, wobei der prinzipielle Aufbau des ersten Verbundbauteils 11 und des weiteren Verbundbauteils 13 beibehalten bleibt. Beispielsweise kann das erste Verbundbauteil 11 steif ausgebildet sein und eine Trägerfunktion innerhalb der Verbundanordnung 10 aufweisen. Dabei können die Schichten 12, 18 und/oder Strukturelemente 14 und/oder Einlegeelemente 19 entsprechend ausgebildet werden.

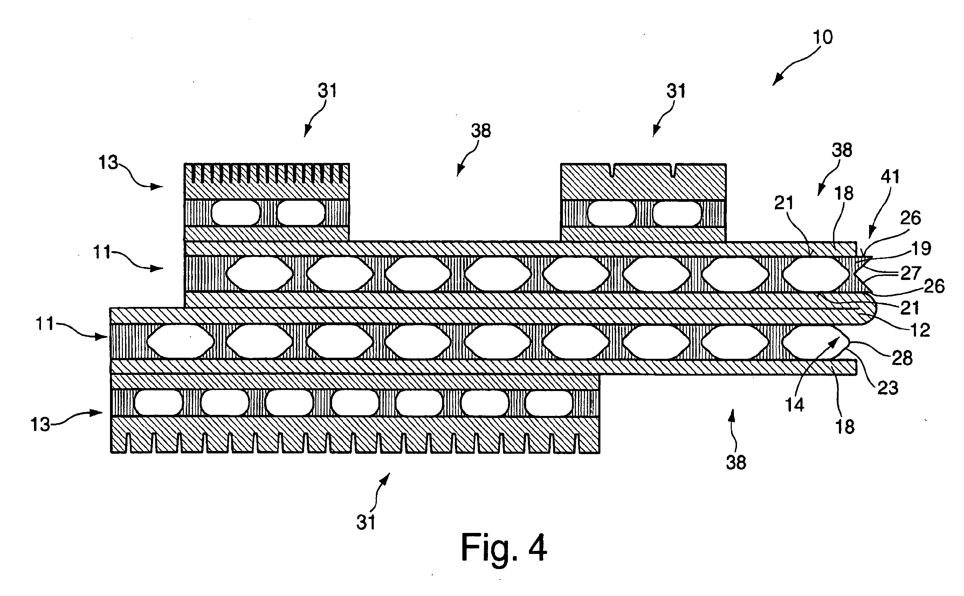

In Figur 4 ist eine schematische Seitenansicht einer erfindungsgemäßen Verbundanordnung 10 in zusammengeklappter oder zusammengefaltener Anordnung dargestellt. Dadurch wird ermöglicht, dass die Verbundanordnung 10 in geringeres flächiges Volumen einnimmt und einfacher transportiert oder zur Aufbewahrung verstaut werden kann. Gemäß dem in Figur 4 dargestellten Ausführungsbeispiel ist vorgesehen, dass die Schicht 18 des Verbundbauteils 11 eine Trennstelle 41 aufweist. Das Einlegeelement 19 ist zum benachbarten Strukturelement 14 nur formschlüssig verbunden, so dass durch eine Schwenkbewegung eines ersten Abschnitts des Verbundbauteils 11 zum zweiten Abschnitt des Verbundbauteils 11 ein einfaches Lösen und Zusammenfalten des Verbundbauteils 11 ermöglicht ist. Die durchgehende Schicht 12 bildet dabei eine Verbindung oder ein Scharnier, um das Verbundbauteil 11 als durchgängige Schicht auszubilden. Die Trennstelle 41 ist beispielsweise in einem mittleren Bereich der Wechselzone 38 vorgesehen. Alternativ kann eine solche Trennstelle 41 auch unmittelbar an eine Seitenfläche des Basismodulelementes 31 anschließen. Die Trennstelle 41 kann auch an jeder weiteren Position in der Verbundanordnung 10 vorgesehen sein. Die Trennstelle 41 kann beispielsweise auch ein Basismodulelement 31 durchqueren. Beim Wiederaufklappen der in Figur 4 dargestellten Verbundanordnung greift zunächst das Strukturelement 14 mit einem Eckbereich 28 in das Einlegeelement 19 ein. Anschließend liegt die Schicht 18 auf der Anlagefläche 26 des Einlegeelementes 19 auf. Nach dem Einsetzen des Wechselmodulelementes 32 ist diese Trennstelle 41 gesichert geschlossen.

Alternativ zu der in Figur 4 dargestellten Ausführungsform kann vorgesehen sein, dass die Schicht 18 durchgehend ist und die Trennstelle 41 in die Schicht 12 eingebracht wird. Die Klapprichtung erfolgt dann entgegengesetzt.

Die Ausgestaltung der Trennstelle 41 kann auch mehrfach vorgesehen sein. Insbesondere ist eine Anordnung von zwei Trennstellen bevorzugt vorgesehen, so dass drei gleich große Abschnitte ausgebildet werden, die zueinander klappbar angeordnet werden können. Die Wechselmodulelemente 32 können nach dem Zusammenlegen der Verbundanordnung 10 auf den verbleibenden Abschnitten übereinander gestapelt werden. Eine solche Anordnung kann auch in einer gemeinsamen Hülle zum einfacheren Transport verstaut werden.

## Patentansprüche

1. Verbundanordnung, bestehend aus wenigstens einem Verbundbauteil (11), mit einer ersten flächenförmigen Schicht (12) und mit zumindest einem Strukturelement (14), wobei das Strukturelement (14) aus einem bandförmigen Körper besteht und eine spiralförmige Anordnung aufweist, **dadurch gekennzeichnet, dass**
- das erste Verbundbauteil (11) als flächenförmig durchgehende Schicht ausgebildet ist, und
- dass zumindest auf einer Seite des ersten Verbundbauteils (11) wenigstens ein weiteres Verbundbauteil (13) als weitere Schicht vorgesehen ist, die eine Auf- öder Anlageflache (33) mit einer Länge und einer Breite bildet, wobei das weitere Verbundbauteil (13) zumindest ein Wechselmodulelement (32) aufweist, das einen Teilbereich der als weiteres Verbundbauteil (13) ausgebildeten Schicht bildet.

2. Verbundanordnung nach Anspruch 1, **dadurch gekennzeichnet, dass** ein Basismodulelement (31) des zumindest einen weiteren Verbundbauteils (13) fest mit dem ersten Verbundbauteil (11) verbunden und zumindest ein weiteres Wechselmodulelement (32) austauschbar und benachbart zum Basismodulelement (31) zur Bildung der weiteren Schicht als zumindest ein weiteres Verbundbauteil (13) vorgesehen ist.

3. Verbundanordnung nach Anspruch 1 oder 2, **dadurch gekennzeichnet, dass** das Wechselmodulelement (32) einen Schichtaufbau aufweist, der mit dem Schichtaufbau des Basismodulelementes (31) und/oder des ersten Verbundbauteils (13) identisch oder ähnlich ist.

4. Verbundanordnung nach Anspruch 1, **dadurch gekennzeichnet, dass** das zumindest eine Wechselmodulelement (32) im Verformungsgrad gleich oder zumindest bezüglich einer Krafteinwirkung auf die Auf- oder Anlagefläche (33) des Wechselmodulelementes (32) abweichend von dem zumindest einen benachbarten Basismodulelement (31) oder dem Verbundbauteil (11) ausgebildet ist.

5. Verbundanordnung nach einem der vorhergehenden Ansprüche, **dadurch gekennzeichnet, dass** das Basismodulelement (31), das Wechselmodulelement (32) und/oder das erste Verbundbauteil (11) einen Schichtaufbau aus einer oder mehreren Lagen von Schaumstoffschichten umfasst.

6. Verbundanordnung nach einem der vorhergehenden Ansprüche, **dadurch gekennzeichnet, dass** die Wechselmodulelemente (32) sich zumindest abschnittsweise oder vollständig über die Breite der Anoder Auflagefläche (33) des ersten Verbundbauteils (11) oder auch nur teilweise entlang der An- oder Auflagefläche (33) erstrecken.

7. Verbundanordnung nach einem der vorhergehenden Ansprüche, **dadurch gekennzeichnet, dass** das Verbundbauteil (11, 13) zumindest ein Einlegeelement (19) aufweist, welches vorzugsweise in einem zwischen zwei Strukturelementen (14) gebildeten Zwischenraum (16) vorgesehen ist.

8. Verbundanordnung nach einem der vorhergehenden Ansprüche, **dadurch gekennzeichnet, dass** der unterschiedliche Verformungsgrad zwischen dem Basis- und Wechselmodulelement (31, 32) durch die geometrische Ausgestaltung der Strukturelemente (14), der Einlegeelemente (19) und/oder der Auflageflächen (33) und/oder des Schichtaufbaus einstellbar ist.

9. Verbundanordnung nach einem der vorhergehenden Ansprüche, **dadurch gekennzeichnet, dass** die Schicht des ersten Verbundbauteils (11) und zumindest eine weitere Schicht des Verbundbauteils (13) mit Basis- und Wechselmodulelementen (31, 32) als Matratze ausgebildet sind, wobei die Wechselmodulelemente (32) zumindest im Schulterbereich und Beckenbereich vorgesehen sind.

10. Verbundanordnung nach einem der Ansprüche 1 bis 7, **dadurch gekennzeichnet, dass** die Schicht des ersten Verbundbauteils (11) als Unterfederung ausgebildet und die zumindest eine Schicht des weiteren Verbundbauteils (13) mit Basis- und Wechselmodulelementen (31, 32) als Matratze ausgebildet ist.

11. Verbundanordnung nach einem der vorhergehenden Ansprüche, **dadurch gekennzeichnet, dass** das erste Verbundbauteil (11) zumindest eine Trennstelle (41) aufweist, welche sich teilweise in das erste Verbundbauteil (11) erstreckt, jedoch eine Schicht (12) oder eine Schicht (18) nicht durchtrennt.

12. Verbundanordnung nach Anspruch 11, **dadurch gekennzeichnet, dass** die zumindest eine Trennstelle (41) sich durch ein Basismodulelement (31) erstreckt.

## Claims

1. A composite assembly consisting of at least one composite component (11) having a first planiform layer (12) and having at least one structural element (14), said structural element (14) consisting of a band-shaped body and having a spiral-shaped arrangement, **characterised in that**
- said first composite component (11) is realised as a continuous, planiform layer, and
- on at least one side of said first composite component (11) at least one further composite component (13) is provided as a further layer forming a support or contact surface (33) with a length and a width, the further composite component (13) having at least one interchangeable modular element (32) which forms a portion of the layer realised as a further composite component (13).

2. The composite assembly as claimed in claim 1, **characterised in that** a basic modular element (31) of the at least one further composite component (13) is fixedly connected with said first composite component (11) and **in that** at least one further interchangeable modular element (32) is provided in an exchangeable manner adjacent to the basic modular element (31) as at least one further composite component (13) so as to form the further layer.

3. The composite assembly as claimed in claim 1 or 2, **characterised in that** the interchangeable modular element (32) has a layer structure which is identical with, or similar to, the layer structure of the basic modular element (31) and/or of the first composite component (13).

4. The composite assembly as claimed in claim 1, **characterised in that** the at least one interchangeable modular element (32) is realised identical with, or different from, the at least one adjacent basic modular element (31) or the composite component (11) as far as the degree of deformation in response to a force exerted on the support or contact surface (33) of the interchangeable modular element (32) is concerned.

5. The composite assembly as claimed in any of the preceding claims, **characterised in that** the basic modular element (31), the interchangeable modular element (32), and/or the first composite component (11) comprise a layer structure consisting of one or several strata of foam layers.

6. The composite assembly as claimed in any of the preceding claims, **characterised in that** the interchangeable modular elements (32) extend at least section-wise or fully over the width of the contact or support surface (33) of the first composite component (11) or extend only partially along said contact or support surface (33).

7. The composite assembly as claimed in any of the preceding claims, **characterised in that** the composite component (11, 13) has at least one insert element (19) which is preferably provided in a space (16) formed between two structural elements (14).

8. The composite assembly as claimed in any of the preceding claims, **characterised in that** the differing degree of deformation between the basic and interchangeable modular elements (31, 32) is adjustable via the geometrical design of the structural elements (14), the insert elements (19) and/or the support surfaces (33) and/or the layer structure.

9. The composite assembly as claimed in any of the preceding claims, **characterised in that** the layer of the first composite component (11) and at least one further layer of the composite component (13) provided with basic and interchangeable modular elements (31, 32) are realised as a mattress, with the interchangeable modular elements (32) being provided at least in the shoulder area and the pelvic area.

10. The composite assembly as claimed in any one of claims 1 to 7, **characterised in that** the layer of the first composite component (11) is realised as a bed base and the at least one layer of the further composite component (13) having basic and
interchangeable modular elements (31, 32) is realised as a mattress.

11. The composite assembly as claimed in any of the preceding claims, **characterised in that** said first composite component (11) has at least one separation point (41) which extends partially into the first composite component (11) without, however, cutting through a layer (12) or a layer (18).

12. The composite assembly as claimed in claim 11, **characterised in that** the at least one separation point (41) extends through a basic modular element (31).

## Revendications

1. Agencement composite constitué par au moins un composant composite (11), avec une première couche planiforme (12) et avec au moins un élément structurel (14), l'élément structurel (14) étant constitué par un corps en forme de bande et présentant un agencement en spirale, **caractérisé en ce que**
- le premier composant composite (11) est formé en tant que couche s'étendant de part en part de manière planiforme, et
- il est prévu, au moins sur un côté du premier composant composite (11), au moins un autre composant composite (13) en tant qu'autre couche qui forme une surface de support ou d'appui (33) pourvue d'une longueur et d'une largeur, l'autre composant composite (13) présentant au moins un élément modulaire interchangeable (32) qui forme une partie de la couche formant l'autre composant composite (13).

2. Agencement composite selon la revendication 1, **caractérisé en ce qu'**un élément modulaire de base (31) dudit au moins un autre composant composite (13) est relié de manière solidaire au premier composant composite (11) et qu'au moins un autre élément modulaire interchangeable (32) est prévu, en tant qu'au moins un autre composant composite (13), de manière être interchangeable et à être contigu à l'élément modulaire de base (31) en vue de former l'autre couche.

3. Agencement composite selon la revendication 1 ou 2, **caractérisé en ce que** l'élément modulaire interchangeable (32) présente une structure en couches qui est identique ou semblable à la structure en couches de l'élément modulaire de base (31) et/ou du premier composant composite (13).

4. Agencement composite selon la revendication 1, **caractérisé en ce que** ledit au moins un élément modulaire interchangeable (32) est formé quant à son degré de déformation de manière identique audit au moins un élément modulaire de base (31) contigu ou au composant composite (11) ou est formé de manière différente de ces derniers au moins quant à l'application d'une force sur la surface de support ou d'appui (33) de l'élément modulaire interchangeable (32).

5. Agencement composite selon l'une quelconque des revendications précédentes, **caractérisé en ce que** l'élément modulaire de base (31), l'élément modulaire interchangeable (32) et/ou le premier composant composite (11) comprennent une structure en couches présentant une ou plusieurs strates de couches en mousse.

6. Agencement composite selon l'une quelconque des revendications précédentes, **caractérisé en ce que** les éléments modulaires interchangeables (32) s'étendent au moins par segments ou entièrement sur la largeur de la surface de support ou d'appui (33) du premier composant composite (11) ou bien seulement partiellement le long de la surface de support ou d'appui (33).

7. Agencement composite selon l'une quelconque des revendications précédentes, **caractérisé en ce que** le composant composite (11, 13) présente au moins un élément d'insertion (19) qui est prévu de préférence dans un espace (16) formé entre deux éléments structuraux (14).

8. Agencement composite selon l'une quelconque des revendications précédentes, **caractérisé en ce que** le degré de déformation différent existant entre l'élément modulaire de base et l'élément modulaire interchangeable (31, 32) peut être réglé grâce à la conception géométrique des éléments structuraux (14), des éléments d'insertion (19) et/ou des surfaces de support (33) et/ou de la structure en couches.

9. Agencement composite selon l'une quelconque des revendications précédentes, **caractérisé en ce que** la couche du premier composant composite (11) et au moins une autre couche du composant composite (13) pourvue d'éléments modulaires de base et d'éléments modulaires interchangeables (31, 32) sont formées en tant que matelas, les éléments modulaires interchangeables (32) étant prévus au moins dans la zone des épaules et la zone du bassin.

10. Agencement composite selon l'une quelconque des revendications 1 à 7, **caractérisé en ce que** la couche du premier composant composite (11) est formée en tant que sommier et que ladite au moins une couche de l'autre composant composite (13) pourvue d'éléments modulaires de base et d'éléments modulaires interchangeables (31, 32) est formée en tant que matelas.

11. Agencement composite selon l'une quelconque des revendications précédentes, **caractérisé en ce que** le premier composant composite (11) présente au moins un point de séparation (41) qui s'étend partiellement dans le premier composant composite (11) sans cependant sectionner une couche (12) ou une couche (18).

12. Agencement composite selon la revendication 11, **caractérisé en ce que** ledit ou moins un point de séparation (41) s'étend à travers un élément modulaire de base (31).
